Europäisches Patentamt

European Patent Office

Office européen des brevets

(19)

(11) **EP 1 096 122 A1**

(12) **EUROPEAN PATENT APPLICATION**
published in accordance with Art. 158(3) EPC

(43) Date of publication:
02.05.2001 Bulletin 2001/18

(51) Int. Cl.$^7$: **F02C 9/00**, G05B 23/00

(21) Application number: 99927001.0

(86) International application number:
PCT/RU99/00186

(22) Date of filing: 03.06.1999

(87) International publication number:
WO 99/64736 (16.12.1999 Gazette 1999/50)

(84) Designated Contracting States:
DE FR GB IT

(30) Priority: 09.06.1998 RU 98110498

(71) Applicant:
Otkritoe Aktsionernoe Obschestvo "Nauchno-Proizvodstvennoe Predpriyatie-Elektronno-Gidravlicheskaya Avtomatika"
Moscow, 125015 (RU)

(72) Inventors:
• ZAZULOV, Viktor Ivanovich
Moscow, 103287 (RU)

• BONDAREV, Leonid Yakovlevich
Moscow, 125284 (RU)
• ZELIKIN, Jury Markovich
Moscow, 103055 (RU)
• DOBRYNIN, Andrei Alexsandrovich
Moscow, 115563 (RU)
• KLEPIKOV, Vladimir Ivanovich
Lobnaya, Moskovskaya obl. 141730 (RU)

(74) Representative:
Andrae, Steffen, Dr. et al
Andrae Flach Haug
Balanstrasse 55
81541 München (DE)

(54) **METHOD FOR DETECTING SENSOR FAILURES AND FOR CONTROLLING THE OPERATION CONDITIONS OF AN OBJECT**

(57) This invention relates to the control systems for the complex technical objects operating in wide range of modes and loads and can be used in the control systems of gas turbine engines, turbines of electrical power generating stations etc.

According to the method the sensors (3) are connected with state observers established on the base of engine (object) (1) model, one observer being connected with all sensors and each of remain observers with all sensors except one, the weighted sum of squared residuals of all observers is determined, the value of weighted sum of squared residuals of the first observer is compared with the values of weighted sums of squared residuals of the each observer from the remain ones, the maximum of received difference signal values is compared with threshold value and the failure signal is established for that sensor (3) indications of which are not used in observer for which this value exceeds the threshold, for each state observer is determined the region of possible residual locations, caused by the errors of predetermined parameters of object model, and it is defined that state observers the residuals of which are outside the limits of predetermined region.

Fig. 1.

EP 1 096 122 A1

## Description

### Branch of technology

This invention relates to the control systems for the complex technical objects operating in wide range of modes and loads and can be used in the control systems of gas turbine engines, turbines of electrical power generating stations etc.

### Prior art level

It is known the sensor fault detection method in which on the base of engine model it is established the object state observers and they are connected with the sensors, one state observer is connected with all sensors and each of subsequent observers is connected with all sensors, except one, then the weighted sum of squared residuals for all observers is determined, after this it is identified the difference between the weighted sums of squared residuals of the first observer and all other observers, it is chosen the maximum value and compared with predetermined threshold value. If this value is higher than predetermined threshold it is established the signal of the "soft" failure of that sensor which indication was not used in state observer, for which value of difference between the weighted sums of squared residuals of the first observer and its own weighted sum of squared residuals is higher than the predetermined threshold value, or "hard" failure if residual values of the first observer are higher than predetermined threshold ( see "Advanced Detection, Isolation and Accommodation of Sensor Failures-Real-Time Evaluation"// W.C. Merril, J.C. Delaat, and W.M. Bruton// NASA Lewis Research Center, Cleveland, Ohio,// J. Guidance, Vol.11, No 6, Nov-Dec. 1988).

As result of this method analysis it is necessary to note that it is characterized by low accuracy, because it does not permit to take into account the real model errors which are rather high at dynamic transient modes, and by low reliability, because the failure of actuator(s) or object unit is identified as the failure of one of the sensors, this can result in emergency situation during object operation.

### Disclosure of invention

The present invention is directed to an improvement of the accuracy and reliability of the sensor fault detection and, therefore, the increasing of object operationability.

To this end the present invention provides the method of the sensor fault detection and the object normal state condition control in which the sensors are connected with the state observers, established on the base of the object model one state observer is connected with all sensors and each of subsequent observers is connected with all sensors, except one, then the weighted sum of squared residuals for all observers is determined, after this the comparison of weighted sums of squared residuals of the first observer with the values of weighted sums of squared residuals of each remain observers, the maximum value of received signals of differences is compared with threshold value and it is established the failure signal of that sensor indication of which was not used in the observer, for which this value exceeds the threshold, and the conclusion about the state of the object sensors; the innovation is that for each state observer it is determined the region of the possible locations of residuals caused by the errors of prescribed parameters of the object model and the sensor failure by choosing that state observers which residuals, during the analysis of sensor indications, are outside the predetermined region, this region of the possible locations of residuals caused by the errors of prescribed parameters of the object model is determined from the relations:

$$Qi = Fi * Qi + Qii * F^\tau i + qi * Qi + q^{-1}i * Gi$$

$$\Sigma i = gi * Ci * Qi * C^\tau i + hi * Wi,$$

where:

$\Sigma i$ is the matrix of the ellipsoid of the possible location the residual vector of the i-observer,
$Qi$ is the matrix of the ellipsoid of the possible location the state vector of the i-observer,
$Fi = Ai - KiCi$ is the own observer matrix,
$qi, gi, hi$ are the scalar coefficients,
$Gi, Wi$ are the matrices of the limit deviations of the model parameters,
$\tau$ is the transpose symbol.

During the patent investigation it was not found the decisions identical to the applied for patent, consequently, this invention corresponds to "'innovation" criteria.

The essence of this invention is not evident from in an explicit form the known decisions, therefore, the proposed decision corresponds to the "invention level" criteria.

We think that the information described in application materials is sufficient for the practical invention realization.

The essence of the method and its application features are explained with the gas turbine engine control system operation as example, where:

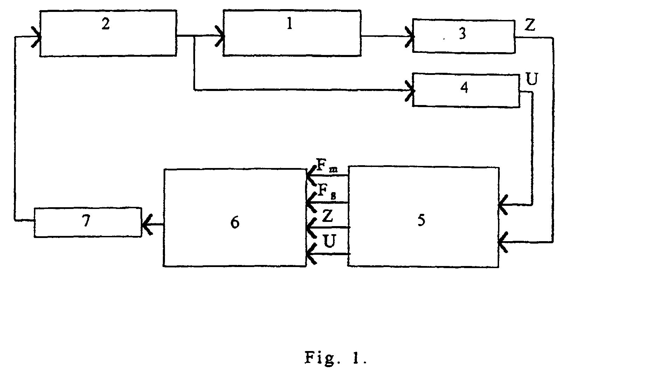

Fig.1 — is the block-scheme of the gas turbine engine control;

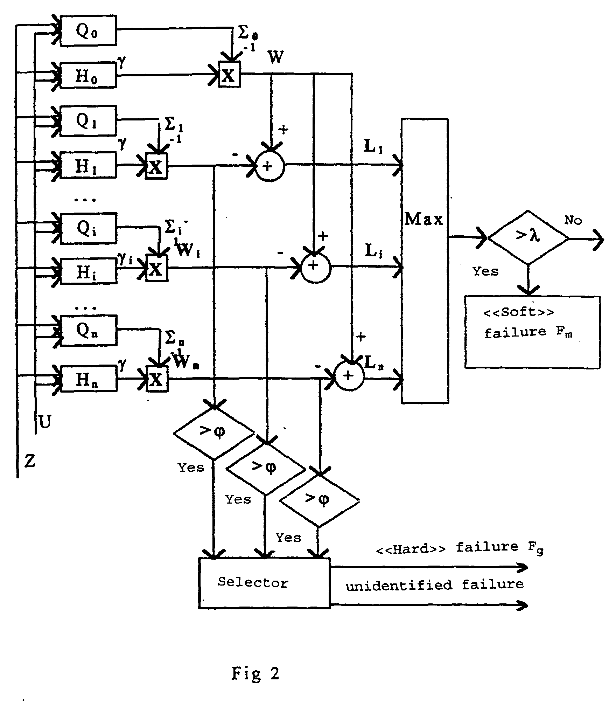

Fig.2 — is the block-scheme of the sensor failure detection.

## A brief description of drawings

During engine 1 operation with actuators 2 its controlled parameter (as a rule there are several) state is sensed by the sensors 3 (as a rule the number of them corresponds to the number of the controlled parameters). The state of the actuators 3 is under the control of the sensors 4. The indications of the sensors 3 and 4 are coming to the system 5 of the sensor fault detection where the analysis of sensor indications is performed and the marks of the sensor fault are established. The corrected sensor indications are coming to the controls 7 connected with the actuators 2.

To realize this method the engine model is produced and on its base the state observer (H) is established.

As engine model the following simplified non-linear model is used:

$$X = A(X - Xb) + B(U - Ub) \tag{1}$$

$$Z = C(X - Xb) + D(U - Ub) + Zb,$$

where

b is the symbol of the parameter value at steady state;
X is the vector of the model state;
U is the vector of the system control actions;
Z is the vector of the sensor indication estimations;
A, B, C, D are the matrices of the coefficients, predicted as the functions of the flight conditions and engine operation mode.

On the base of the model (1) it is established the following (n+1) state observers:

$$Xi = Ai(Xi - Xb) + Bi(U - Ub) + Ki\gamma i \tag{2}$$

$$Zi = Ci(Xi - Xb) + Di(U - Ub) + Zb$$

$$\gamma i = Zi - Z,$$

where

$Xi$ is the estimation of the engine state vector of i-observer;
$Z$ is the estimation of the sensor indications of i-observer;
$Ki$ is the matrix of the coefficients of i-observer;
$\gamma i$ is the residual vector of i-observer;
i is the number of the observer i = 0..........n.

The $Ki$ matrices have the column number equal to the number of the measured parameters and can be calculated, for example, as the Kalman Filter matrix.

The number of state observers (H) is one unit more than the number (n) of the object (engine) sensors.

One state observer (Ho) is connected with all sensors and each of remain observers ($H_1$...Hn) is connected with all sensors except one.

For Ho observer the Ko matrix is used completely and for $H_1$-Hn observers in Ki matrices the i-column is completed by zeros corresponding to the sensor which is no operating in this observer. This provides the non-sensitivity the observer from the $H_1$-Hn group to the failure of the one particular sensor.

To increase the accuracy and reliability of the object operation the region of the possible residual locations, caused by, is determined for each of $H_1$-Hn state observers. The above mentioned region is determined from the following relations:

$$Qi = Fi * Qi + Qi * F^\tau i + qi * Qi + qi^{-1} * \quad Gi \qquad (3)$$

$$\Sigma i = gi * Ci * Qi * C^\tau i + hi * Wi,$$

where:

$\Sigma i$ is the matrix of the ellipsoid of the possible location the residual vector of the i-observer,
$Qi$ is the matrix of the ellipsoid of the possible location the state vector of the i-observer,
$Fi = Ai — KiCi$ is the own observer matrix,
$qi$, $gi$, $hi$ are the scalar coefficients,
$Gi$, $Wi$ are the matrices of the limit deviations of the model parameters,
$\tau$ is the transpose symbol.

The equations (3) permit at each moment to determine the ($\Sigma i$) region of possible spread of residuals of state observers, caused by the errors of prescribed parameters of the engine model.

The hardware elements necessary for the method realization are known and they are not the subject of this invention, that is why they are not discovered in this application for patent.

During the object operation the information from the sensors comes to all state observers.

(Ho) observer produces the estimations of all sensor indications and each of $H_1$-Hn observers produces the estimations of indications of all sensor except one.

Then it is calculated the $\gamma i$ residuals (the differences between the real measured values and the estimations) for all sensors of each (n+1) observer and the weighted sum of squared residuals for all observers according the relation $Wi = \gamma i \, \Sigma i \, \gamma i$ is determined, after this the differences between the weighted sums of squared residuals of Ho observer and all other observers ($L1 = Wo — Wi$ ,... $Li = Wo — Wi$ ,... $Ln = Wo — Wn$ ) are defined, the maximum of calculated differences is compared with its threshold ($\lambda$), which was predetermined on the base of experimental results for each particular object.

In case of (Li) exceeds the $\lambda$ value the failure signal Fm ( m=i ) is established of that sensor which indications were not be used in Hi observer.

Furthermore, the weighted sum of residuals of each of observers (Hi...Hn) is compared with the fixed threshold $\varphi$ ($\varphi$=1).

The condition Wi>$\varphi$ means that residual vector $\gamma$ is outside the limits of $\Sigma i$ region of possible residual locations.

The failure Fg of g-sensor is fixed in that case when for (n-2) observers the conditions Wi>$\varphi$ ($\varphi$=i) are satisfied, and this condition is not satisfied for one observer only.

As result of the analysis of the values of failure signals Fm and Fg on the 7 block of the system reconfigurations it is taken the decision about the possibility of using the indications of i-sensor or about the substitution of its indications by the indications of back-up sensor or about the using, instead of indications of estimated sensor, its indications from one of the observers, in which the indications of this sensor are not used.

If the condition Wi>$\varphi$ is satisfied for all observers or for the number of observers less than (n-2), it means that the failure presents in engine 1 elements or in actuators 2. In this case it is taken the decision about the complete switch off the controls 7 and the transition to back-up control.

**Industrial applicability of the invention**

The proposed method permits to increase the accuracy and reliability of object operation by means of definition of the region of possible residual locations of observers, caused by the errors of the model parameters.

**Claims**

1. METHOD OF THE SENSOR FAULT DETECTION AND THE OBJECT NORMAL STATE CONDITION CONTROL in which the sensors (3) are connected with state observer established on the base of object model, one observer is connected with all sensors (3) and each of remain observers with all sensors (3) except one, the weighted sum of squared residuals of all observers is determined, the value of weighted sum of squared residuals of the first observer is compared with the values of weighted sums of squared residuals of the each observer from the remain ones, the maximum of received difference signal values is compared with threshold value and the failure signal is established for that sensor (3) indications of which are not used in observer for which this value exceeds the threshold and the conclusion about sensor (3) and object states is taken, **which differs** in that for each state observer it is determined the region of possible residual locations, caused by the errors of predetermined parameters of object model, and the sensor (3) failure is defined by means the choosing of that state observers residuals of which during sensor (3) indication analysis are outside the limits of predetermined region.

2. METHOD OF THE SENSOR FAULT DETECTION AND THE OBJECT NORMAL STATE CONDITION CONTROL in accordance with p.**1**, which differs in that the region of the possible residual locations, caused by the errors of predetermined parameters of object model, is determined from the relations:

$$Qi = Fi * Qi + Qi * F^{\tau}i + qi * Qi + qi^{-1} * \quad Gi$$

$$\Sigma i = gi * Ci * Qi * C^{\tau}i + hi * Wi,$$

where:

$\Sigma i$ is the matrix of the ellipsoid of the possible location the residual vector of the i-observer,
$Qi$ is the matrix of the ellipsoid of the possible location the state vector of the i-observer,
$Fi = Ai — KiCi$ is the own observer matrix,
$qi$, $gi$, $hi$ are the scalar coefficients,
$Gi$, $Wi$ are the matrices of the limit deviations of the model parameters,
$\tau$ is the transpose symbol.

Fig. 1.

Fig 2

# INTERNATIONAL SEARCH REPORT

| International application No. |
| --- |
| PCT/RU 99/00186 |

| A. CLASSIFICATION OF SUBJECT MATTER |
| --- |
| F02C 9/00, G05B 23/00 |
| According to International Patent Classification (IPC) or to both national classification and IPC |

| B. FIELDS SEARCHED |
| --- |
| Minimum documentation searched (classification system followed by classification symbols) |
| F02C 9/00-9/48, G05B 23/00 |
| Documentation searched other than minimum documentation to the extent that such documents are included in the fields searched |
| Electronic data base consulted during the international search (name of data base and, where practicable, search terms used) |

## C. DOCUMENTS CONSIDERED TO BE RELEVANT

| Category* | Citation of document, with indication, where appropriate, of the relevant passages | Relevant to claim No. |
| --- | --- | --- |
| A | WALTER C.MERRILL et al. Advanced Detection, Isolation and Accomodation of Sensor Failures-Real-Time Evaluation. J.Guidance, vol.11, No.6, nov.-dec.1988 | 1-2 |
| A | US 4212161 A (UNITED TECHNOLOGIES CORPORATIONS) 15 July 1980 (15.07.80) | 1-2 |
| A | EP 0095434 B1 (UNITED TECHNOLOGIES CORPORATIONS) 13 July 1988 (13.07.88) | 1-2 |
| A | DE 3926707 A1 (GENERAL ELECTRIC CO.) 28 June 1990 (28.06.90) | 1-2 |
| A | SU 714841 A1 (BLINDERMAN V.V. et al.) 10 March 1996 (10.03.96) | 1-2 |
| A | SU 805324 A (RAKHIMOV G.N. et al.) 16 February 1981 (16.02.81) | 1-2 |

| ☐ Further documents are listed in the continuation of Box C. | ☐ See patent family annex. |
| --- | --- |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 06 October 1999 (06.10.99) | 14 October 1999 (14.10.99) |
| Name and mailing address of the ISA/ <br><br> RU <br> Facsimile No. | Authorized officer <br><br><br> Telephone No. |

Form PCT/ISA/210 (second sheet) (July 1992)